(19) Europäisches Patentamt
European Patent Office
Office européen des brevets

(11) **EP 3 508 302 A1**

(12) **EUROPEAN PATENT APPLICATION**
published in accordance with Art. 153(4) EPC

(43) Date of publication:
**10.07.2019 Bulletin 2019/28**

(21) Application number: **17846273.5**

(22) Date of filing: **24.08.2017**

(51) Int Cl.:
**B23K 35/368** (2006.01)   **B23K 35/30** (2006.01)

(86) International application number:
**PCT/JP2017/030260**

(87) International publication number:
**WO 2018/043268 (08.03.2018 Gazette 2018/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.08.2016 JP 2016168202**

(71) Applicant: **Kabushiki Kaisha Kobe Seiko Sho
(Kobe Steel, Ltd.)
Kobe-shi, Hyogo 651-8585 (JP)**

(72) Inventors:
• **INOUE Tsukuru**
  **Hyogo, 651-8585 (JP)**
• **NISHIMOTO Shinichi**
  **Kanagawa 251-8551 (JP)**
• **NAGAMI Masayuki**
  **Kanagawa 251-8551 (JP)**
• **ISONO Shinya**
  **Kanagawa 251-8551 (JP)**

(74) Representative: **Müller-Boré & Partner
Patentanwälte PartG mbB
Friedenheimer Brücke 21
80639 München (DE)**

(54) **SEAMLESS WIRE CONTAINING WELDING FLUX**

(57)   This seamless wire containing welding flux is formed by filling a steel sheath with flux, the amount of Fe in the flux per total mass of the wire being 2-15 mass%, and the flux filling ratio being 10-30 mass%. When the amount (mass%) of Fe in the flux per total mass of the wire is X and the flux filling ratio (mass%) is Y, expression (1) is satisfied. By means of this seamless wire containing welding flux, variation in the flux cross-sectional area relative to the wire cross-sectional area, which is caused by a reverse airflow generated during a diameter reduction step, is reduced, and wire breakage during the diameter reduction step is prevented.

$$Y > -2X + 19 \quad (1)$$

## Description

Technical Field

The present invention relates to a seamless flux-cored welding wire.

Background Art

Seamless flux-cored welding wires (hereinafter, referred to also as "seamless wires") have been used in shipbuilding, the construction of offshore structures, and the like. Seamless wires are commonly produced by forming a strip steel into a sheath-like shape, charging flux into the steel sheath, subsequently forming the steel sheath into a pipe-like shape, joining the edges of the pipe-shaped steel sheath which are butted against each other by welding, and reducing the diameter of the pipe to the diameter of the wire that is to be produced.

If the wire breaks when the diameter of the wire is reduced by rolling or drawing, the production yield may be reduced significantly because it takes a considerable amount of time to retrieve the wire. Accordingly, there has been a demand for a technique for preventing the wire from breaking in the rolling or drawing step.

For example, it is described in PTL 1 that, in a method for producing a seamless flux-cored welding wire, using flux that includes 6 wt% or more iron powder and a lubricant in an amount that is 0.03% to 0.20% the amount of the iron powder, the iron powder having a grain size of 125 $\mu$m or less, improves the flowability of the flux and consequently prevents the wire from breaking in the rolling or drawing step.

Citation List

Patent Literature

PTL 1: Japanese Unexamined Patent Application Publication No. 8-290296

Summary of Invention

Technical Problem

In PTL 1, the flowability of the flux is enhanced by mixing the predetermined amount of lubricant with an iron powder and adjusting the grain size of the iron powder to be the predetermined size or less. This reduces variations in the thickness of the sheath which are caused due to the irregularities of the flux charged inside the pipe and consequently limits the likelihood of the wire breaking in the rolling or drawing step.

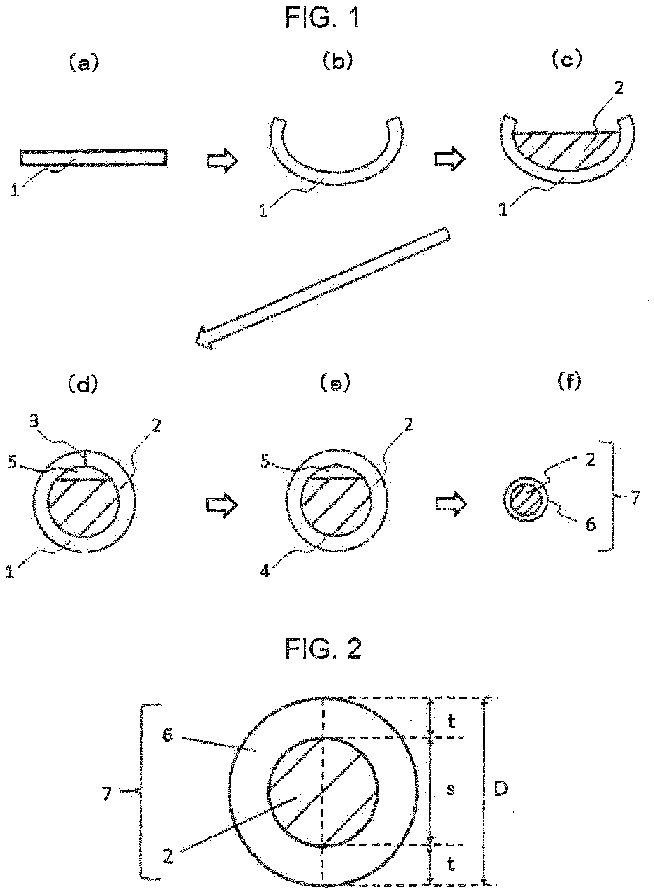

Fig. 1 is a schematic diagram illustrating a method for producing the seamless wire.

In the production method, first, a strip steel 1 is prepared (see Fig. 1(a)), and the strip steel 1 is formed into a sheath-like shape (see Fig. 1(b)). The inside of the sheath-shaped strip steel 1 is filled with flux 2 (see Fig. 1(c)). The edges of the strip steel 1 are butted against each other to form a seam 3 (see Fig. 1(d)). The seam 3 is welded to form a pipe 4 (see Fig. 1(e)). The pipe 4 is drawn in order to reduce the diameter of the pipe 4. Hereby, a seamless wire 7 that includes a steel sheath 6 and the flux 2 charged inside the steel sheath 6 is produced (see Fig. 1(f)).

While the inside of the pipe 4 that has not yet been subjected to the diameter reduction is filled with the flux 2, a space 5 is left inside the pipe 4 as illustrated in Fig. 1(e). In addition to the space 5, the flux 2, which is a powder, includes voids formed therein. The size of the space 5 decreases with a reduction in the diameter of the pipe 4 caused by drawing. Consequently, the size of the space 5 left in the final product, that is, the seamless wire 7, is negligibly small.

The inventors of the present invention found that, in the production of a seamless wire, air flows in a direction opposite to that in which the wire is fed, that is, a reverse airflow is generated, in the diameter reduction process and determined that the breakage of the wire is caused as a result of the reverse airflow disturbing the flux charged inside the steel sheath and increasing variations in the proportion of the cross-sectional area of the flux to the cross-sectional area of the wire.

However, in PTL 1, there is no discussion of the issue unique to seamless wires, that is, the variations in the proportion of the cross-sectional area of the flux to the cross-sectional area of the wire, which are caused by the reverse airflow generated in the diameter reduction process. It is considered that a reduction in breakage of the wire achieved in PTL 1 is limited.

Accordingly, it is an object of the present invention to provide a seamless flux-cored welding wire that reduces variations in the proportion of the cross-sectional area of the flux to the cross-sectional area of the wire which are caused by the reverse airflow generated in the diameter reduction process and the likelihood of the wire breaking in the diameter reduction process.

Solution to Problem

The inventors of the present invention conducted extensive studies in order to achieve the above object and made an attempt to minimize the space left inside the steel sheath, which is not filled with the flux, in order to reduce the amount of reverse airflow generated in the diameter reduction process. Specifically, the inventors conceived that the amount of the above reverse airflow may be reduced by increasing the Fe content in the flux compared with fluxes commonly used for producing the wires and thereby increasing the proportion of the area of the flux to the cross-sectional area of the wire so as to reduce the size of the space which is not filled with the flux. Thus, the present invention was made.

Specifically, the present invention relates to a seamless flux-cored welding wire including a steel sheath and flux filled in the steel sheath,
the proportion of the amount of Fe included in the flux to the total mass of the wire being 2% to 15% by mass,
a flux filling ratio being 10% to 30% by mass,
the wire satisfying Expression (1) below,

$$Y > -2X + 19 \qquad (1)$$

where X is the proportion (mass%) of the amount of Fe included in the flux to the total mass of the wire and Y is the flux filling ratio (mass%).

The above-described seamless flux-cored welding wire may have an outside diameter of 0.8 mm or more and 8.0 mm or less.

In the above-described seamless flux-cored welding wire, the ratio t/D of the thickness t (mm) of the steel sheath of the wire to the diameter D (mm) of the wire may be 0.15 to 0.30.

Advantageous Effects of Invention

It is not possible to freely change the mass ratio between the steel sheath and the flux because, in general, the proportions of the constituents of the wire are limited. Accordingly, in the present invention, while the Fe content in the flux is increased such that the contents of Fe and constituents other than Fe relative to the total mass of the wire are maintained unchanged, the proportion of the cross-sectional area of the flux in a cross section of the wire is increased by increasing the flux filling ratio in order to reduce the space left inside the pipe that has not yet been subjected to the diameter reduction. This reduces the amount of reverse airflow generated in the subsequent diameter reduction process and variations in the proportion of the cross-sectional area of the flux in a cross section of the wire. Among possible constituents of the flux, Fe has a relatively high specific gravity. In the present invention, since the Fe content in the flux is high and the flux has a high specific gravity, the flux is not susceptible to the reverse airflow generated in the diameter reduction process and the variations in the proportion of the cross-sectional area of the flux in a cross section of the wire may be further reduced. As described above, reducing the variations in the proportion of the cross-sectional area of the flux in a cross section of the wire, which are caused by the reverse airflow, may effectively limit the likelihood of the wire breaking in the diameter reduction process.

Brief Description of Drawings

Fig. 1 is a schematic diagram illustrating a method for producing a seamless flux-cored welding wire.
Fig. 2 is a cross-sectional view of a seamless flux-cored welding wire.

Description of Embodiments

Embodiments of the present invention are described below in detail. The present invention is not limited by the following embodiments. Hereinafter, "percentage by mass" (mass%) is synonymous with "percentage by weight" (weight%).

A seamless flux-cored welding wire according to an embodiment is a seamless flux-cored welding wire that includes a steel sheath and flux filled in the steel sheath.

The proportion of the amount of Fe included in the flux to the total mass of the wire is 2% to 15% by mass.

The flux filling ratio is 10% to 30% by mass.

The wire satisfies Expression (1) below,

$$Y > -2X + 19 \qquad (1)$$

where X is the proportion (mass%) of the amount of Fe included in the flux to the total mass of the wire and Y is the flux filling ratio (mass%).

In the seamless wire according to the embodiment, the proportion of the amount of Fe included in the flux to the total mass of the wire is 2% to 15% by mass.

Since Fe is a constituent having a relatively high specific gravity among possible constituents of the flux, the higher the Fe content in the flux, the higher the specific gravity of the flux. Consequently, the flux becomes not susceptible to the reverse airflow generated in the diameter reduction process. This reduces the variations in the proportion of the cross-sectional area of the flux in a cross section of the wire and limits the likelihood of the wire breaking in the diameter reduction process. In order to achieve the above advantageous effects in a sufficient manner, in the seamless wire according to the embodiment, the proportion of the amount of Fe included in the flux to the total mass of the wire is 2% by mass or more, is preferably 2.5% by mass or more, and is more preferably 3% by mass or more. Note that, the specific gravity of Fe is 7.8. The specific gravities of some of the other possible constituents of the flux are as described below: the specific gravity of Ti is 4.5; the specific gravity of Al is 2.7; the specific gravity of Mn is 7.4; and the specific gravity of Ni is 8.9.

However, if the proportion of the amount of Fe included in the flux to the total mass of the wire exceeds 15% by mass, the amount of flux charged becomes excessively large. In such a case, the thickness of the steel sheath becomes small, and the likelihood of breakage of the wire may be increased accordingly. Therefore, in the seamless wire according to the embodiment, the proportion of the amount of Fe included in the flux to the total mass of the wire is set to 15% by mass or less, is preferably 14% by mass or less, and is more preferably 13% by mass or less.

Note that, the total mass of the wire is the sum total of the total mass of the steel sheath and the total mass of the flux.

The term "Fe included in the flux" used herein refers to Fe included in the flux as a simple substance and also to Fe included in a Fe-containing alloy, such as a Fe-Si alloy or a Fe-Mn alloy.

The seamless wire according to the embodiment may be any type of wire, such as a rutile flux-cored wire, a metal flux-cored wire, or a fluoride flux-cored wire, such that the proportion of the amount of Fe included in the flux to the total mass of the wire falls within the above range. The other constituents are not limited and may be selected appropriately so as not to impair the advantageous effects of the present invention.

Examples of the possible constituents of a flux-cored wire according to an embodiment (hereinafter, referred to also as "flux-cored wire according to an embodiment") are described below. The possible constituents and the contents thereof are not limited by the following description. The contents of the following constituents are expressed as a percentage by mass relative to the total mass of the wire.

In the flux-cored wire according to an embodiment, an oxide, such as $TiO_2$, $SiO_2$, $ZrO_2$, $Al_2O_3$, $Na_2O$, or $K_2O$, serves as a principal constituent of a slag agent and an arc stabilizer.

If the content of the oxide is low, it becomes difficult to form beads by all-position welding. Furthermore, arc stability becomes degraded and the amount of spatters is increased. Accordingly, the content of the oxide is preferably 2% or more and is more preferably 3% or more. However, if the content of the oxide is excessively high, the occurrence of defects, such as slag inclusion, may be increased. Moreover, the oxygen content in the weld metal is increased, and the toughness of the weld metal may become degraded consequently. Therefore, the content of the oxide is preferably 8% or less and is more preferably 7% or less.

In the flux-cored wire according to an embodiment, a deoxidizing element, such as C, Si, Mn, Al, Mg, Ti, or B, enables deoxidation and facilitates refinement of the microstructure of the weld metal. Consequently, the deoxidizing element effectively increases the strength of the weld metal and enhances the toughness of the weld metal. If the content of the deoxidizing element is low, the weld metal may have a low strength and poor toughness. Accordingly, the content of the deoxidizing element is preferably 1% or more and is more preferably 2% or more. However, if the content of the deoxidizing element is high, the toughness of the weld metal may become degraded due to excessively high strength and excessively high hardenability. Therefore, the content of the deoxidizing element is preferably 5% or less and is more preferably 4% or less.

The above deoxidizing elements are added from a metal, an alloy, the steel sheath, or the like. The method by which the deoxidizing elements are added to the wire is not limited. The above values concerning the specification of the deoxidizing elements do not include the amounts of Ti and the like included in the above oxides, such as $TiO_2$.

In the flux-cored wire according to an embodiment, an alloying element, such as Ni, Cu, Cr, Mg, or Co, effectively increases strength and enhances toughness. The alloying element is used in an amount appropriate to the strength and toughness required.

If the content of the alloying element is high, hardenability is enhanced excessively and toughness becomes degraded. Furthermore, cold cracking susceptibility is enhanced and, as a result, cracking may occur in the weld metal. Accordingly, the content of the alloying element is preferably 10% or less and is more preferably 9% or less.

The above alloying elements are added from a metal, an alloy, the steel sheath, or the like. The method by which the alloying elements are added to the wire is not limited.

In the flux-cored wire according to an embodiment, a fluorine compound reduces the partial pressure of H in the arc atmosphere and the amount of diffusible hydrogen included in the weld metal. The fluorine compound also increases the amount of fumes generated during welding. Examples of the fluorine compound include $NaF$, $K_2SiF_6$, $LiF$, $CaF$, $BaF_2$, and $MgF_2$. When the total content of the fluorine compound is 0.01% or more in terms of fluorine equivalent, the amount of diffusible hydrogen included in the weld metal can be reduced. The total content of the fluorine compound is more preferably 0.05% or more in terms of fluorine equivalent. However, if the total content of the fluorine compound exceeds 0.50% in terms of fluorine equivalent, an excessively large amount of fumes may be generated. Therefore, the content of the fluorine compound is preferably 0.50% or less and is more preferably 0.40% or less.

The balance of the composition of the flux-cored wire according to an embodiment includes Fe and inevitable impurities.

In the seamless wire according to the embodiment, the flux may include a lubricant, such as mica or talc. However, it is preferable that the flux substantially do not include a lubricant in order to limit an increase in the moisture content in the flux. In the case where the flux substantially does not include a lubricant, a sintering step can be omitted and, therefore, the production costs may be reduced advantageously. The expression "substantially do not include a lubricant" used herein means that the flux may include a lubricant in a small amount that is 0.01% by mass or less of the total mass of the flux. The seamless wire according to the embodiment is capable of effectively reducing breakage of the wire even when the flux substantially does not include a lubricant.

In the seamless wire according to the embodiment, the flux filling ratio varies with the proportion of the amount of Fe included in the flux to the total mass of the wire in consideration of the compositional ratio the wire should satisfy, which is specified by a predetermined standard. In this embodiment, the flux filling ratio is set to 10% to 30% by mass. In order to reduce the amount of reverse airflow generated when the diameter of the wire is reduced by drawing and limit variations in the proportion of the cross-sectional area of the flux in a cross section of the wire, it is preferable to reduce the size of a space left inside the pipe that has not yet been subjected to the diameter reduction. Reducing the size of the space left inside the pipe also limits variations in the cross-sectional area of the flux and thereby enables the deposited metal to have consistent properties. From the above viewpoints, in this embodiment, the flux filling ratio is set to 10% by mass or more, is preferably 12% by mass or more, and is more preferably 13.5% by mass or more.

However, an excessively high flux filling ratio results in a necessity to significantly reduce the thickness of the steel sheath and may lead to breakage of the wire. Accordingly, in this embodiment, the flux filling ratio is set to 30% by mass or less, is preferably 28% by mass or less, and is more preferably 25% by mass or less.

Note that, the flux filling ratio defines the mass of the flux charged inside the steel sheath in terms of proportion to the total mass of the wire (steel sheath + flux).

The seamless wire according to the embodiment needs to satisfy Expression (1) below,

$$Y > -2X + 19 \qquad (1)$$

where X is the proportion (mass%) of the amount of Fe included in the flux to the total mass of the wire and Y is the flux filling ratio (mass%).

As demonstrated in Examples below, the seamless wire that satisfies Expression (1) above is capable of effectively reducing the likelihood of the wire breaking when the diameter of the wire is reduced by drawing.

The composition of the steel sheath included in the seamless wire according to the embodiment may be adjusted appropriately in consideration of the proportions of constituents of the flux, such as Fe, and is not limited. The steel sheath may have any composition with which the advantageous effects of the present invention are achieved. The steel sheath typically includes additive elements associated with the desired properties with the balance including Fe and inevitable impurities. Examples of the additive elements include C, Si, Mn, P, S, Ni, and Mo.

The outside diameter of the seamless wire according to the embodiment is preferably, but not limited to, 0.8 mm or more and is more preferably 1.0 mm or more in order to reduce breakage of the wire. In order to reduce variations in the flux filling ratio, the outside diameter of the seamless wire is preferably 8 mm or less, is more preferably 6 mm or less, and is further preferably 5 mm or less.

In the seamless wire according to the embodiment, the ratio t/D of the thickness t (mm) of the steel sheath of the wire to the diameter D (mm) of the wire is preferably 0.15 to 0.30. The higher the ratio t/D, the smaller the variations in the proportion of the cross-sectional area of the flux in a cross section of the wire. From the above viewpoint, the ratio t/D is preferably 0.15 or more and is more preferably 0.17 or more. However, an excessively high t/D results in a reduction in the cross-sectional area of the flux and an excessive increase in the proportion of the steel sheath, which reduce ease of feeding of the wire. Accordingly, the ratio t/D is preferably 0.30 or less and is more preferably 0.28 or less.

The thickness t of the steel sheath of the wire is described below with reference to Fig. 2, which is a cross-sectional view of the seamless wire according to the embodiment. In Fig. 2, D denotes the diameter of the seamless wire 7; and t denotes the length of each of the regions of a segment that is the diameter D of the seamless wire 7 which correspond to the steel sheath 6. In other words, the length t corresponds to (D-s)/2, where s is the length of a region of the diameter of the wire which corresponds to the flux 2.

The seamless wire according to the embodiment may be produced by, for example, the production method illustrated in Fig. 1.

First, a strip steel 1, which is to be formed into the steel sheath of the seamless wire, is prepared as in Fig. 1(a). The strip steel 1 is formed into a sheath-like shape as illustrated in Fig. 1(b). The method for forming the strip steel 1 into a sheath-like shape is not limited and may be any method by which a strip steel can be formed into a sheath-like shape. A publicly known method may be used appropriately.

The inside of the sheath-shaped strip steel 1 is filled with flux 2 as illustrated in Fig. 1(c). The edges of the strip steel 1 are butted against each other to form a seam 3 as illustrated in Fig. 1(d). The seam 3 is welded to form a seamless pipe 4 as illustrated in Fig. 1(e). In this embodiment, the proportion of the space 5 inside the pipe 4 that is in the state illustrated in Fig. 1(e) is reduced by increasing the flux filling ratio while increasing the proportion of the amount of Fe included in the flux to the total mass of the wire.

When the pipe is drawn under the above conditions in order to reduce the diameter of the pipe, the size of the space 5 is gradually reduced and, finally, a seamless wire 7 that includes a steel sheath 6 and flux 2 charged inside the steel sheath 6, in which the space 5 is negligibly small, is produced as illustrated in Fig. 1(f). In this diameter reduction process, the air present inside the space 5 flows in a direction opposite to that in which the wire is fed. That is, a reverse airflow is generated. In this embodiment, since the proportion of the space 5 inside the pipe 4 is reduced to be small, the amount of reverse airflow can be reduced and, consequently, the disturbance of the flux 2 inside the pipe 4, which is caused by the reverse airflow, can be suppressed. Furthermore, since the flux 2 includes a large amount of Fe and has a high specific gravity, the flux 2 is not susceptible to the reverse airflow. This suitably reduces variations in the proportion of the cross-sectional area of the flux to the cross-sectional area of the wire and effectively limits the likelihood of the wire breaking in the diameter reduction process.

EXAMPLES

The present invention is described further specifically with reference to Examples below. The present invention is not limited by Examples below. Variations and modifications within the spirit of the present invention may be made without departing from the scope of the present invention.

Strip steels having the composition described in Table 1, the same thickness, and the same width were prepared. The strip steels were formed into a sheath-like shape. The balance of the composition of the strip steels which is described in Table 1 included Fe and inevitable impurities.

Flux was charged into the sheath-like strip steels. Subsequently, the edges of each of the strip steels were butted against each other to form a seam, which was welded to form a pipe. The composition and amount of each of the flux samples used in the respective examples were adjusted independently.

The diameters of the pipes were reduced to 1.170 mm by drawing. Hereby, seamless wires of the examples were prepared.

The compositions of the seamless wires of the examples fell within the range described in Table 2. Note that, the balance of the composition of the wires which is described in Table 2 included Fe and inevitable impurities.

Table 3 summarizes the proportion of the amount of Fe included in the flux to the total mass of the wire and the flux filling ratio that were determined for each of the examples. The proportion of the amount of Fe included in the flux to the total mass of the wire was calculated in the following manner.

First, the Fe content in the flux charged in each of the wires was measured by an ICP-MS (inductively coupled plasma-mass spectrometer, produced by SHIMADZU CORPORATION: ICP9820). The Fe content in the flux was multiplied by (flux filling ratio/100) to give the proportion of the amount of Fe included in the flux to the total mass of the wire.

The thickness (t, unit: mm) of the steel sheath of each of the wires and the diameter (D, unit: mm) of the wire were measured, and the ratio (t/D) therebetween was calculated. Table 3 also summarizes the results.

Table 3 also summarizes the value of the right side of Expression (1) calculated for each of the examples and whether or not Expression (1) was satisfied in the example.

$$Y > -2X + 19 \quad (1)$$

where X is the proportion (mass%) of the amount of Fe included in the flux to the total mass of the wire, and Y is the flux filling ratio (mass%).

Table 3 also summarizes whether or not each of the wires prepared in the examples broke in the diameter reduction process when the weight of the wire was one ton. An evaluation of "○" was given when the number of times the wire broke was zero. An evaluation of "×" was given when the number of times the wire broke was one or more.

[Table 1]

Table 1 Composition of strip steels

| Chemical composition (mass%) | | | | |
|---|---|---|---|---|
| C | Si | Mn | P | S |
| 0.01 | 0.01 | 0.24 | 0.007 | 0.006 |

[Table 2]

Table 2 Composition of wires (relative to total mass)

| Chemical composition (mass%) | | | |
|---|---|---|---|
| Oxide | Deoxidizing element | Alloying element | Fluorine compound (fluorine equivalent) |
| 6.5 | 3.8 | 1.8 | 0.20 |

[Table 3]

Table 3

| Examples | Proportion of amount of Fe included in flux to total mass of wire (mass%) | Flux filling ratio (mass%) | Thickness of steel sheath of wire (t) (mm) | Diameter of wire (D) (mm) | t/D | -2X+ 19 | Expression (1) | Number of times wire broke |
|---|---|---|---|---|---|---|---|---|
| No. 1 | 8.0 | 22.0 | 0.236 | | 0.201 | 3 | ○ | ○ |
| No. 2 | 5.9 | 20.0 | 0.253 | | 0.216 | 7.2 | ○ | ○ |
| No. 3 | 1.4 | 14.5 | 0.274 | | 0.234 | 16.2 | × | × |
| No. 4 | 2.4 | 16.0 | 0.290 | 1.170 | 0.248 | 14.2 | ○ | ○ |
| No. 5 | 12.0 | 25.0 | 0.216 | | 0.185 | -5 | ○ | ○ |
| No. 6 | 6.0 | 14.5 | 0.278 | | 0.238 | 7 | ○ | ○ |
| No. 7 | 16.0 | 28.0 | 0.171 | | 0.146 | -13 | ○ | × |
| No. 8 | 5.9 | 9.5 | 0.386 | | 0.330 | 7.2 | ○ | × |

Among Nos. 1 to 8, Nos. 1, 2, and 4 to 6 are examples, while Nos. 3, 7, and 8 are comparative examples.
The seamless wire No. 3, in which the proportion of the amount of Fe included in the flux to the total mass of the wire was 1.4% by mass, that is, low, and which did not satisfy the relationship represented by Expression (1), broke in the diameter reduction process.
The seamless wire No. 7, in which the proportion of the amount of Fe included in the flux to the total mass of the wire was 16.0% by mass, that is, high, broke in the diameter reduction process. The seamless wire No. 7 also had a low t/D of 0.146.

The seamless wire No. 8, in which the flux filling ratio was 9.5% by mass, that is, low, broke in the diameter reduction process. The seamless wire No. 8 also had a high t/D of 0.330.

The seamless wires Nos. 1, 2, and 4 to 6, which fall within the scope of the present invention, did not break in the diameter reduction process.

Although the present invention has been described in detail with reference to particular embodiments, it is apparent to a person skilled in the art that various modifications can be made therein without departing from the spirit and scope of the present invention.

The present application is based on Japanese Patent Application No. 2016-168202 filed on August 30, 2016, which is incorporated herein by reference in its entirety.

Reference Signs List

1  STRIP STEEL
2  FLUX
3  SEAM
4  PIPE
5  SPACE
6  STEEL SHEATH
7  SEAMLESS WIRE

**Claims**

1. A seamless flux-cored welding wire comprising a steel sheath and flux filled in the steel sheath,
   the proportion of the amount of Fe included in the flux to the total mass of the wire being 2% to 15% by mass,
   a flux filling ratio being 10% to 30% by mass,
   the wire satisfying Expression (1) below,

$$Y > -2X + 19 \qquad (1)$$

   where X is the proportion (mass%) of the amount of Fe included in the flux to the total mass of the wire and Y is the flux filling ratio (mass%).

2. The seamless flux-cored welding wire according to Claim 1, the wire having an outside diameter of 0.8 mm or more and 8.0 mm or less.

3. The seamless flux-cored welding wire according to Claim 1 or 2, wherein the ratio t/D of the thickness t (mm) of the steel sheath of the wire to the diameter D (mm) of the wire is 0.15 to 0.30.

# FIG. 1

(a)

(b)

(c)

# FIG. 2

**INTERNATIONAL SEARCH REPORT**

| International application No. |
| --- |
| PCT/JP2017/030260 |

A.  CLASSIFICATION OF SUBJECT MATTER
B23K35/368(2006.01)i, B23K35/30(2006.01)i

According to International Patent Classification (IPC) or to both national classification and IPC

B.  FIELDS SEARCHED

Minimum documentation searched (classification system followed by classification symbols)
B23K35/368, B23K35/30

Documentation searched other than minimum documentation to the extent that such documents are included in the fields searched
Japanese Published Examined Utility Model Applications      1922-1996
Japanese Published Unexamined Utility Model Applications    1971-2017
Japanese Examined Utility Model Registrations              1996-2017
Japanese Registered Utility Model Specifications           1994-2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 10-166180 A (NIPPON STEEL CORPORATION) 23 June 1998, paragraphs [0012], [0013]<br>(Family: none) | 1-2<br>3 |
| X<br>Y | JP 11-129092 A (NIPPON STEEL WELDING PRODUCTS & ENGINEERING CO., LTD.) 18<br>May 1999, paragraphs [0035]-[0046] (Family: none) | 1-2<br>3 |
| X<br>Y | JP 2000-301381A (NIPPON STEEL WELDING PRODUCTS & ENGINEERING CO., LTD.)<br>31 October 2000, paragraphs [0069]-[0073], [0095]-[0098]<br>& US 6140607 A, examples 1, 3<br>& EP 1046454 A1 & CN 1271634 A & KR 10-2000-0067758 A | 1-2<br>3 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 November 2017 | 28 November 2017 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**INTERNATIONAL SEARCH REPORT**

| International application No. |
|---|
| PCT/JP2017/030260 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 59-16694 A (NIPPON STEEL WELDING PRODUCTS & ENGINEERING CO., LTD.) 27 January 1984, page 3, upper left column, line 3 to upper right column, line 9 (Family: none) | 3 |
| A | JP 11-10391A (NIPPON STEEL CORPORATION) 19 January 1999 (Family: none) | 1-3 |
| A | JP 2002-210588 A (KISWEL LTD.) 30 July 2002 & KR 10-2002-0059981 A | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8290296 A
- JP 2016168202 A